# EUROPEAN PATENT APPLICATION

(11) **EP 2 645 233 A1**
(43) Date of publication of application: **02.10.2013**
(21) Application number: 12199550.0
(22) Date of filing: 27.12.2012
(51) Int. Cl.: G06F 3/14, H04N 5/44

(54) **Electronic apparatus and input switching method**

(30) Priority: 29.03.2012 JP 2012076224
(71) Applicant: Kabushiki Kaisha Toshiba, Tokyo 105-8001 (JP)
(72) Inventor: Nakade, Tomoaki, Tokyo, 105-8001 (JP)
(74) Representative: Henkel, Breuer & Partner

(57) **Abstract**

According to one embodiment, an electronic apparatus includes a communication module (1, 2, 3), a memory (153), and a controller (150). The communication module is configured to transmit a power status request command to one or more connection apparatuses and to receive responses to the command. The memory is configured to store power statuses of the one or more connection apparatuses based on the responses. The controller is configured to select an input of a connection apparatus in a power-on state based on the power statuses in response to a first input switching operation.

## Description

Embodiments described herein relate generally to an electronic apparatus and input switching method.

In recent years, digital apparatuses with a High-Definition Multimedia Interface (HDMI), for example, digital TVs, digital players, and digital recorders have prevailed. For example, a digital TV includes a plurality of HDMI sockets, and can be connected to a plurality of digital apparatuses via a plurality of HDMI cables.

The user can control the digital TV using a remote controller, and can switch inputs of the digital TV using the remote controller. When the digital TV is connected to a digital player and digital recorder, it switches its current input (for example, a digital broadcast input) to that from the digital player in response to an input switching instruction from the remote controller, and switches the input from the digital player to that from the digital recorder in response to the next input switching instruction. In this manner, the digital TV can switch inputs in turn in response to the input switching instructions from the remote controller.

For example, when the digital player connected to the digital TV is in a power-off state, the digital TV may switch the current input to that from the digital player in the power-off state in response to an input switching instruction from the remote controller. When the digital player in the power-off state is connected to the digital TV via an AV amplifier in a power-on state or the like, the digital TV may switch the current input to that from the AV amplifier in the power-on state (that is, the input from the digital player in the power-off state) in response to an input switching instruction from the remote controller.

A general architecture that implements the various features of the embodiments will now be described with reference to the drawings. The drawings and the associated descriptions are provided to illustrate the embodiments and not to limit the scope of the invention.
FIG. 1 is a block diagram showing an example of connections between an electronic apparatus (television broadcast receiver) according to an embodiment and connection apparatuses;
FIG. 2 is a table showing an example of the pin configuration of an HDMI terminal;
FIG. 3 is a block diagram showing an example of the arrangement of the electronic apparatus (television broadcast receiver) according to the embodiment;
FIG. 4 is a flowchart showing an example of input switching control according to the embodiment;
FIG. 5 is a view showing a first example of a switching window displayed in response to the input switching control according to the embodiment;
FIG. 6 is a view showing a first example of the switching window displayed in response to the input switching control according to the embodiment; and
FIG. 7 is a view showing an example of a switching menu screen according to the embodiment.

Various embodiments will be described hereinafter with reference to the accompanying drawings.

In general, according to one embodiment, an electronic apparatus includes a communication module, a memory, and a controller. The communication module is configured to transmit a power status request command to one or more connection apparatuses and to receive responses to the command. The memory is configured to store power statuses of the one or more connection apparatuses based on the responses. The controller is configured to select an input of a connection apparatus in a power-on state based on the power statuses in response to a first input switching operation.

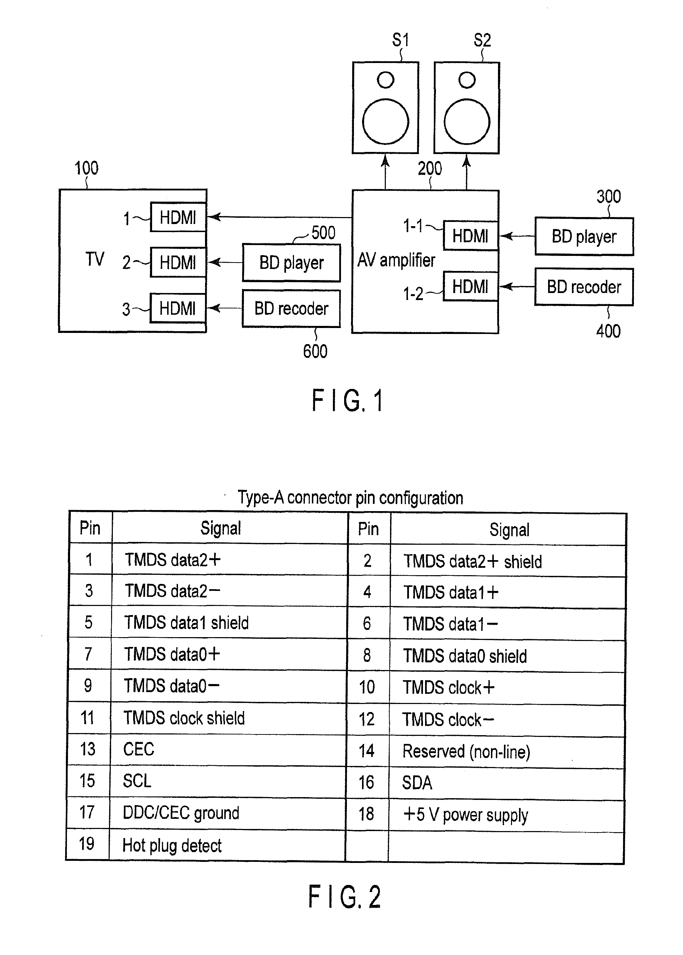

FIG. 1 is a block diagram showing an example of connections between an electronic apparatus according to an embodiment and connection apparatuses. As shown in FIG. 1, for example, a television broadcast receiver 100 (electronic apparatus) includes a plurality of HDMI terminals, and can be connected to a plurality of connection apparatuses via these plurality of HDMI terminals and a plurality of HDMI cables. For example, the television broadcast receiver 100 includes HDMI 1, HDMI 2, and HDMI 3; and HDMI 1 of the television broadcast receiver 100 is connected to an AV amplifier 200 (connection apparatus) via an HDMI cable.

For example, the AV amplifier 200 includes HDMI 1-1 and HDMI 1-2, and is connected to loudspeakers S1 and S2. HDMI 1-1 of the AV amplifier 200 is connected to a BD player 300 (connection apparatus) via an HDMI cable. In other words, the television broadcast receiver 100 and BD player 300 are indirectly connected. HDMI 1-2 of the AV amplifier 200 is connected to a BD recorder 400 (connection apparatus) via an HDMI cable. In other words, the television broadcast receiver 100 and BD recorder 400 are indirectly connected.

The AV amplifier 200 receives video and audio signals from the BD player 300 via HDMI 1-1, outputs the audio signal to the loudspeakers S1 and S2, and outputs the video signal to HDMI 1 of the television broadcast receiver 100. The AV amplifier 200 receives video and audio signals from the BD recorder 400 via HDMI 1-2, outputs the audio signal to the loudspeakers S1 and S2, and outputs the video signal to HDMI 1 of the television broadcast receiver 100.

Furthermore, HDMI 2 of the television broadcast receiver 100 is connected to a BD player 500 (connection apparatus) via an HDMI cable. In other words, the television broadcast receiver 100 and BD player 500 are directly connected. HDMI 3 of the television broadcast receiver 100 is connected to a BD recorder 600 (connection apparatus) via an HDMI cable. In other words, the television broadcast receiver 100 and BD recorder 600 are directly connected.

HDMI 2 of the television broadcast receiver 100 receives video and audio signals from the BD player 500, and outputs video and audio signals. HDMI 3 of the television broadcast receiver 100 receives video and audio signals from the BD recorder 600 and outputs video and audio signals.

FIG. 2 shows an example of the pin configuration of a terminal of the HDMI. The terminal of the HDMI described in this embodiment has the pin configuration shown in, for example, FIG. 2. For example, pin number 13 is Consumer Electronics Control (CEC), pin number 15 is the serial data clock line (SCL), pin number 16 is the serial data analyzer (SDA), and pin number 18 is +5 V power.

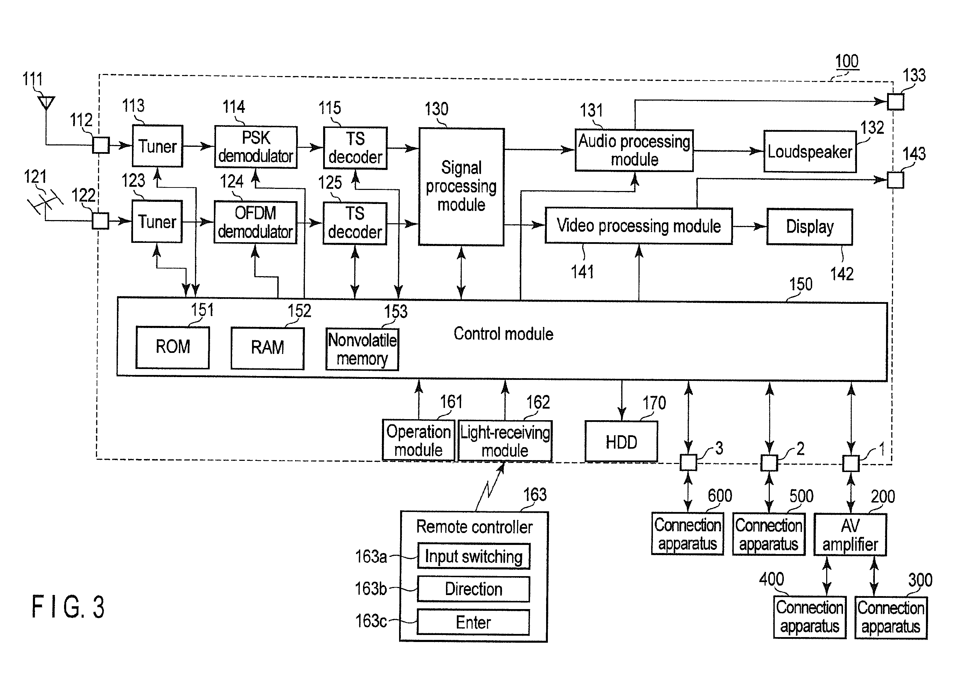

FIG. 3 shows an example of the arrangement of the television broadcast receiver 100. As shown in FIG. 3, for example, the television broadcast receiver 100 includes a broadcast signal input terminal 112, tuner 113, phase-shift keying (PSK) demodulator 114, transport stream (TS) decoder 115, broadcast signal input terminal 122, tuner 123, orthogonal frequency division multiplexing (OFDM) demodulator 124, TS decoder 125, signal processing module 130, audio processing module 131, loudspeaker 132, audio output terminal 133, video processing module 141, display 142, video output terminal 143, control module 150, ROM 151, RAM 152, nonvolatile memory 153, power status management unit 154, operation module 161, light-receiving module 162, remote controller 163, HDD 170, HDMI 1, HDMI 2, and HDMI 3.

The broadcast signal input terminal 112 receives a broadcast signal from an antenna 111, the tuner 113 tunes a predetermined channel signal from the broadcast signal, and the predetermined channel signal is input to the signal processing module 130 via demodulation processing by the PSK demodulator 114 and decoding processing by the TS decoder 115. The signal processing module outputs an audio signal included in the demodulated and decoded signal to the audio processing module 131, and outputs a video signal included in the demodulated and decoded signal to the video processing module 141. The audio processing module 131 converts the audio signal into an analog signal, and externally outputs the analog signal via the loudspeaker 132. The video processing module 141 applies, for example, image quality enhancement processing to the video signal, and inputs the processed video signal to the display 142. The display 142 displays an image according to the video signal. Also, the broadcast signal input terminal 122 receives a broadcast signal from an antenna 121, and the broadcast signal is externally output via the tuner 123, OFDM demodulator 124, and TS decoder 125.

The control module 150 detects signals from the operation module 116 or those from the remote controller 163, and controls various operations based on the detected signals. Under the control of the control module 150, the video and audio signals are output, as described above, and an input is switched.

For example, the remote controller 163 includes an input switching key 163a, direction keys (up, down, right, and left) 163b, enter key 163c, and the like. In response to pressing of the input switching key 163a, the remote controller 163 notifies an input switching instruction, and the control module 150 executes input switching control based on the notified input switching instruction. In response to pressing of one of the direction keys 163b, the remote controller 163 notifies a direction instruction, and the control module 150 executes direction designation control based on the notified direction. Also, in response to pressing of the enter key 163c, the remote controller 163 notifies an enter instruction, and the control module 150 executes operation decision control based on the notified enter instruction.

Note that the operation module 116 also includes an input switching key, direction keys, enter key, and the like, and the control module 150 executes input switching control, direction designation control, and operation decision control in response to pressing of the respective keys.

An example of the input switching control by the television broadcast receiver 100 (electronic apparatus) shown in FIGS. 1 and 3 will be described below.

The control module 150 can detect the presence/absence of insertion of an HDMI cable to HDMI 1, and the presence/absence of a signal to HDMI 1. Likewise, the control module 150 can detect the presence/absence of insertion of an HDMI cable to HDMI 2, and the presence/absence of a signal to HDMI 2. Likewise, the control module 150 can detect the presence/absence of insertion of an HDMI cable to HDMI 3, and the presence/absence of a signal to HDMI 3. The presence/absence of insertion of the HDMI cable can be detected using, for example, the hardware arrangement. Also, the presence/absence of a signal can use a method of detecting the presence/absence of a video signal by decoding TMDS data or a signal from a clock line.

The nonvolatile memory 153 stores the detection results. For example, when the HDMI cable is inserted into HDMI 1 (presence of HDMI cable insertion) and a signal is input to HDMI 1 (presence of signal), HDMI 1 is called a priority selection terminal. When no HDMI cable is inserted into HDMI 1 (absence of HDMI cable insertion), HDMI 1 is called a selection disabled terminal. When no signal is input to HDMI 1 (absence of signal), HDMI 1 is called a selectable terminal.

The control module 150 executes first input switching control based on the presence/absence of insertion of the cables and the presence/absence of signals in response to pressing of the input switching key 163a, and selects an input from the priority selection terminal. For example, when HDMI 1 and HDMI 2 are priority selection terminals and HDMI 3 is a selection disabled terminal, the control module 150 selects an input of HDMI 1 in response to first pressing of the input switching key 163a, and switches the current input (for example, a DTV input of the broadcast signal input terminal 112 or 122) to the input of HDMI 1. Also, the control module 150 selects an input of HDMI 2 in response to second pressing of the input switching key 163a, and switches the current input (input of HDMI 1) to the input of HDMI 2. The control module 150 does not select an input of HDMI 3 in response to third pressing of the input switching key 163a, and switches the current input to the next input (for example, the input of the broadcast signal input terminal 112 or 122).

Note that when HDMI 1, HDMI 2, and HDMI 3 are priority selection terminals, the control module 150 switches the current input (for example, the DTV input of the broadcast signal input terminal 112 or 122) to the input of HDMI 1 in response to pressing of the input switching key 163a, switches the current input

(input of HDMI 1) to the input of HDMI 2 in response to next pressing of the input switching key 163a, switches the current input (input of HDMI 2) to the input of HDMI 3 in response to next pressing of the input switching key 163a, and switches the current input (input of HDMI 3) to the initial input (for example, the DTV input of the broadcast signal input terminal 112 or 122) in response to next pressing of the input switching key 163a.

The control module 150 does not execute unnecessary input switching operations based on the first input switching control.

Furthermore, the control module 150 can execute second input switching control based on power statuses of the connection apparatuses. For example, the control module 150 transmits a power status request command to all the connection apparatuses (directly connected connection apparatuses and indirectly connected connection apparatuses), receives responses to this command, stores (recognizes) the power statuses of all the connection apparatuses based on these responses, and selects, based on the power statuses, an input of the connection apparatus in a power-on state in response to an input switching operation (pressing of the input switching key 163a).

As an example of the above command, <Give Device Power Status> of the HDMI CEC standard can be used. When the connection apparatuses are compatible with HDMI CEC V1.3 or higher, the television broadcast receiver 100 transmits <Give Device Power Status> to the connection apparatuses to inquire information as to whether or not the current power status of each connection apparatus is a power-on state or power-off state. The television broadcast receiver 100 can recognize a power status of each connection apparatus based on <Report Power Status> returned from that connection apparatus.

The nonvolatile memory 153 stores <Report Power Status> from the connection apparatuses. For example, assume that the BD player 300 returns a power-on state (power on), the BD recorder 400 returns a power-off state (power off), the BD player 500 returns a power-on state (power on), and the BD recorder 600 returns a power-off state (power off). The control module 150 determines HDMI 1-1 to which the BD recorder 300 is connected as a priority selection terminal, HDMI 1-2 to which the BD recorder 400 is connected as a selectable terminal, HDMI 2 to which the BD player 500 is connected as a priority selection terminal, and HDMI 3 to which the BD recorder 600 is connected as a priority selection terminal.

The control module 150 executes the second input switching control based on the power statuses (determination results) of the connection apparatuses in response to pressing of the input switching key 163a, and selects an input from the priority selection terminal. In response to first pressing of the input switching key 163a, the control module 150 selects the input of HDMI 1-1 and switches the current input (for example, the DTV input of the broadcast signal input terminal 112 or 122) to the input of HDMI 1-1. Also, in response to second pressing of the input switching key 163a, the control module 150 skips input selection of HDMI 1-2, selects the input of HDMI 2, and switches the current input to the input of HDMI 2. In response to third pressing of the input switching key 163a, the control module 150 skips input selection of HDMI 3, selects the next input, and switches the current input to the next input.

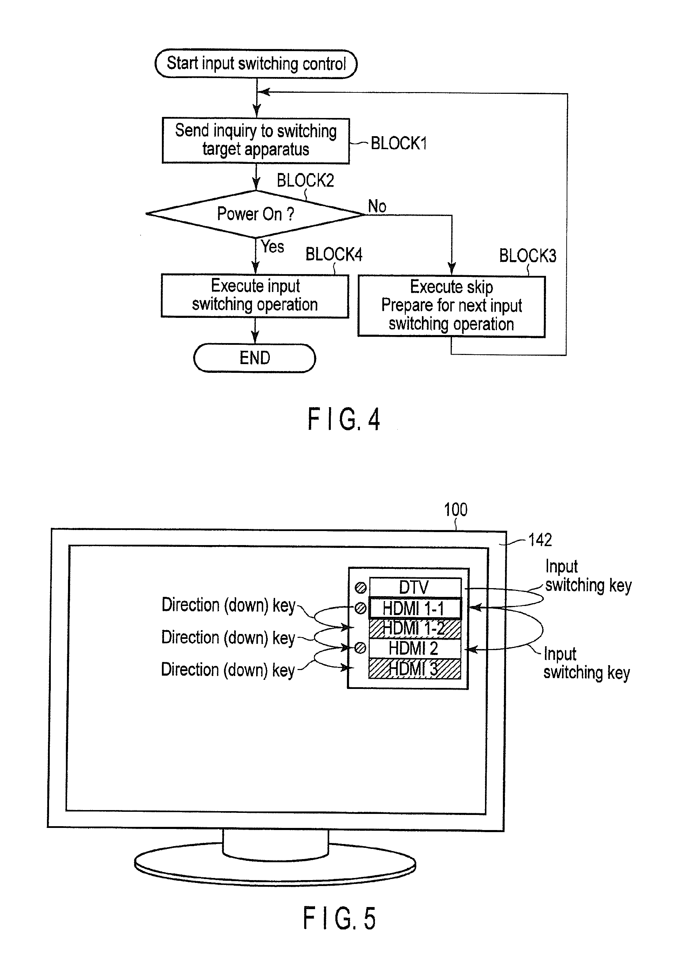

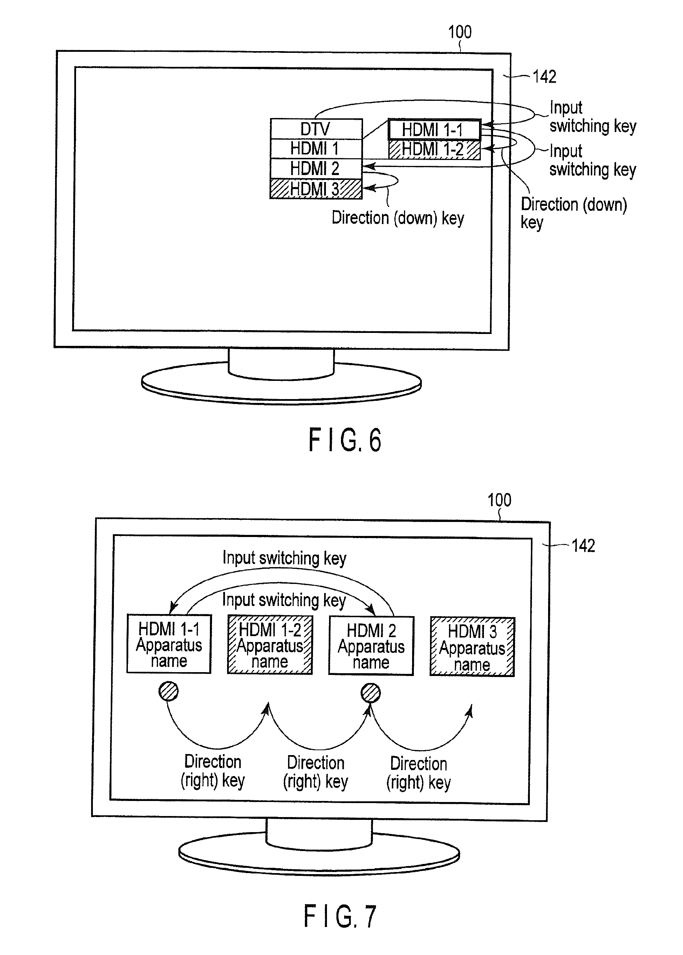

FIG. 5 shows a first example of a switching window displayed in response to the second input switching control. FIG. 6 shows a second example of the switching window displayed in response to the second input switching control. FIG. 7 shows an example of a switching menu screen displayed in response to a call operation of the switching menu screen.

As shown in FIG. 5 or 6, the video processing module 141 of the television broadcast receiver 100 outputs first display information required to display partner apparatuses in a power-on state in a first display format (for example, first color) and second display information required to display partner apparatuses in a power-off state in a second display format (for example, second color) in response to execution of the second input switching control by pressing (first input switching operation) of the input switching key 163a. In response to this, the display 142 displays the partner apparatuses in the power-on state in the first display format (for example, first color) and those in the power-off state in the second display format (for example, second color). In response to the aforementioned first pressing of the input switching key 163a, the display 142 displays the input of HDMI 1-1 in a selected state, and the control module 150 switches the current input (DTV input) to the input of HDMI 1-1 after an elapse of a predetermined time period or in response to pressing of the enter key 163c. When the user presses the input switching key 163a again before an elapse of the predetermined time period, the control module 150 judges that operation as the aforementioned second pressing of the input switching key 163a. Then, the display 142 displays the input of HDMI 2 in a selected state, and the control module 150 switches the current input to the input of HDMI 2 after an elapse of the predetermined time period or in response to pressing of the enter key 163c. That is, by the input switching key 163a, the connection apparatus in a power-off state can be skipped, and that in a power-on state can be selected.

Also, in response to pressing (second input switching operation) of the direction key (down) 163b while the switching window shown in FIG. 5 or 6 is displayed (for example, the input of HDMI 1-1 is selected), the display 142 displays the input of HDMI 1-2 in a selected state, and the control module 150 switches the current input to the input of HDMI 1-2 after an elapse of the predetermined time period or in response to pressing of the enter key 163c. Although the BD recorder 400 connected to HDMI 1-2 is in a power-off state, the control module 150 notifies the BD recorder 400 of a power-on command, and the BD recorder 400 shifts to a power-on state in response to this command. That is, by the direction key 163b, either of the connection apparatus in a power-on state or that in a power-off state can be selected. For example, in response to a selection operation of the connection apparatus in a power-off state, the television broadcast receiver 100 can issue a power-on instruction to the connection apparatus in a power-off state.

Alternatively, on the switching menu screen shown in FIG. 7 as well, the connection apparatus in a power-off state is skipped and that in a power-on state can be selected in response to pressing of the input switching key 163a. Also, either of the connection apparatus in a power-on state or that in a power-off state can be selected in response to pressing of the direction key (right) 163b.

As shown in FIG. 1, even when the television broadcast receiver 100 is connected either directly to the partner apparatuses or indirectly to the partner apparatuses, the second input switching control is valid. With the aforementioned command, since the television broadcast receiver 100 can detect the power statuses of the partner apparatuses connected directly or indirectly to itself, efficient input switching operations according to the power statuses of all the connection apparatuses can be executed.

An inquiry timing of the power statuses of the partner apparatuses using the above command will be described below. For example, as shown in the flowchart of FIG. 4, the control module 150 can inquire the partner apparatus of its power status in response to pressing of the input switching key 163a (BLOCK 1). If the partner apparatus is in a power-off state (NO in BLOCK 2), the control module 150 skips switching (BLOCK 3), and inquires the next partner apparatus of a power status (BLOCK 1). If the next partner apparatus is in a power-on state (YES in BLOCK 2), the control module 150 selects the input from the next partner apparatus, and switches the current input to the input of the next partner apparatus (BLOCK 4).

Alternatively, the control module 150 sends a power status inquiry to all the connection apparatuses in advance, and the nonvolatile memory 153 stores the power statuses of all the connection apparatuses in advance. Then, in response to pressing of the input switching key 163a, the input of the connection apparatus in a power-on state can also be selected with reference to the stored power statuses. For example, the control module 150 sends a power status inquiry to all the connection apparatuses at an activation timing, and stores the power statuses of all the connection apparatuses in a database of the nonvolatile memory 153. Also, the control module 150 sends a power status inquiry to all the connection apparatuses periodically (at n-second or m-minute intervals), and updates the database of the nonvolatile memory 153 periodically. Thus, an input switching time can be shortened.

Note that when the BD player 300, BD recorder 400, BD player 500, and BD recorder 600 are in a power-on state, the control module 150 switches the current input (for example, the input of the broadcast signal input terminal 112) to the input of HDMI 1-1 in response to pressing of the input switching key 163a, switches the current input (input of HDMI 1-1) to the input of HDMI 1-2 in response to next pressing of the input switching key 163a, switches the current input (input of HDMI 1-2) to the input of HDMI 2 in response to next pressing of the input switching key 163a, switches the current input (input of HDMI 2) to the input of HDMI 3 in response to next pressing of the input switching key 163a, and switches the current input (input of HDMI 3) to the initial input (for example, the input of the broadcast signal input terminal 112) in response to next pressing of the input switching key 163a.

Note that the power-on state means an active state (a state in which first electric power is consumed), and the power-off state means a standby state (a state in which second electric power lower than the first electric power is consumed).

With the second input switching control, the following effects can be obtained.
(1) The television broadcast receiver 100 can present a directly connected connection apparatus in a power-on state and an indirectly connected connection apparatus in a power-on state as priority selection candidates. In other words, the television broadcast receiver 100 can skip selection of a directly connected connection apparatus in a power-off state and an indirectly connected connection apparatus in a power-off state, and can select a connection apparatus in a power-on state. That is, the television broadcast receiver 100 can present connection apparatuses which are ready to output video and audio signals as priority selection candidates, and can implement priority selection of the connection apparatus which is ready to output video and audio signals. Thus, an efficient and quick switching operation can be reasonably attained.
(2) The television broadcast receiver 100 can present a directly connected connection apparatus in a power-off state and an indirectly connected connection apparatus in a power-off state as selectable candidates. Also, the television broadcast receiver 100 can select a connection apparatus in a power-off state.

According to at least one embodiment, an electronic apparatus and input selection method which allow an input selection (input switching) operation according to a power status of a connection apparatus can be provided.

## Claims

1. An electronic apparatus **characterized by** comprising:
a communication module (1, 2, 3) configured to transmit a power status request command to one or more connection apparatuses and to receive responses to the command;
a memory (153) configured to store power statuses of the one or more connection apparatuses based on the responses; and
a controller (150) configured to select an input of a connection apparatus in a power-on state based on the power statuses in response to a first input switching operation.

2. The apparatus of Claim 1, **characterized in that** the memory is configured to store first power status information indicating that a first connection apparatus is in a power-on state and second power status information indicating that a second connection apparatus is in a power-off state, and
the controller is configured to select an input of the first connection apparatus and not to select an input of the second connection apparatus in response to the first input switching operation.

3. The apparatus of Claim 2, **characterized in that** the memory is configured to store third power status information indicating that a third connection apparatus is in a power-on state, and
the controller is configured to select the input of the first connection apparatus in response to the first input switching operation and to select an input of the third connection apparatus in response to the next first input switching operation.

4. The apparatus of Claim 3, **characterized by** comprising:
an output module (141) configured to output first display information which displays information associated with the first connection apparatus and the third connection apparatus in a first display format in response to the first input switching operation.

5. The apparatus of Claim 4, **characterized in that** the output module is configured to output second display information which displays information associated with the second connection apparatus in a second display format in response to the first input switching operation.

6. The apparatus of Claim 2, **characterized in that** the controller is configured to select an input of the second connection apparatus in response to a second input switching operation.

7. The apparatus of Claim 1, **characterized in that** the communication module is configured to transmit the command to one or more indirectly connected connection apparatuses and to receive the responses.

8. The apparatus of Claim 1, **characterized in that** the communication module is configured to transmit the command to one or more directly connected connection apparatuses and one or more indirectly connected connection apparatuses and to receive the responses.

9. The apparatus of Claim 1, **characterized in that** the controller is configured to switch a current input to a selected input in response to a selection operation.

10. An input switching method **characterized by** comprising:
transmitting a power status request command to one or more connection apparatuses and receiving responses to the command;
storing power statuses of the one or more connection apparatuses based on the responses; and
selecting an input of a connection apparatus in a power-on state based on the power statuses in response to a first input switching operation.
